# EUROPÄISCHE PATENTSCHRIFT

(11) **EP 3 877 649 B1**
(45) Veröffentlichungstag und Bekanntmachung des Hinweises auf die Patenterteilung: **20.09.2023**
(21) Anmeldenummer: 19783521.8
(22) Anmeldetag: 07.10.2019
(51) Int. Cl.: F03D 15/00, F16H 57/025

(54) **ASYMMETRISCHE DREHMOMENTSTÜTZEN**
ASYMMETRIC TORQUE BRACKETS
SUPPORTS DE COUPLE ASYMÉTRIQUES

(30) Priorität: 07.11.2018 DE 102018218936
(43) Veröffentlichungstag der Anmeldung: 15.09.2021
(73) Patentinhaber: ZF Friedrichshafen AG, 88046 Friedrichshafen (DE)
(72) Erfinder: WÜRR, Michael, 97828 Marktheidenfield (DE); VANHOLLEBEKE, Frederik, 88046 Friedrichshafen (DE); VAN DER KAMP, Tom, 88046 Friedrichshafen (DE)
(86) Internationale Anmeldenummer: PCT/EP2019/077022
(87) Internationale Veröffentlichungsnummer: WO 2020/094309

(56) Entgegenhaltungen:
- EP-A1- 2 541 096
- WO-A1-2017/045688
- BE-A3- 1 017 836
- US-A- 1 803 895

## Beschreibung

Die Erfindung betrifft ein Getriebe für eine Windkraftanlage nach dem Oberbegriff von Anspruch 1.

Bei Getrieben für Windkraftanlagen stellt sich das sogenannte "Torque Arm Flapping" immer mehr als ein Problem heraus, das die Zertifizierung der Anlage gefährdet. Torque Arm Flapping bezeichnet eine Eigenschwingung der Drehmomentstützen des Getriebes in axialer Richtung.

Der Erfindung liegt die Aufgabe zugrunde, das Schwingungsverhalten eines Getriebes für eine Windkraftanlage zu verbessern. Insbesondere sollen die Eigenschwingungen der Drehmomentstützen des Getriebes in axialer Richtung entschärft werden.

Diese Aufgabe wird gelöst durch ein Getriebe nach Anspruch 1. Bevorzugte Weiterbildungen sind in den Unteransprüchen enthalten.

Das Getriebe weist eine erste Drehmomentstütze und eine zweite Drehmomentstütze auf. Bevorzugt bestehen die erst Drehmomentstütze und die zweite Drehmomentstütze aus dem gleichen Material.

Eine Drehmomentstütze ist eine mechanische Struktur zum Abstützen eines Eingangsdrehmoments des Getriebes in einem Maschinenträger der Windkraftanlage. Die Drehmomentstütze weist einen Stützarm und ein Befestigungselement auf. Das Befestigungselement ist ausgebildet, in dem Maschinenträger fixiert zu werden. Gewöhnlich ist es als ein Auge ausgeführt, in das zur Befestigung in dem Maschinenträger ein Bolzen eingesteckt wird. Der Stützarm verbindet das Befestigungselement mit einem Gehäuse des Getriebes und dient dazu, Kräfte zwischen dem Gehäuse und dem Befestigungselement zu übertragen. Insbesondere überträgt der Stützarm Kräfte, die aus dem Eingangsdrehmoment resultieren.

Das Getriebe weist bevorzugt genau zwei Drehmomentstützen auf. In diesem Fall existiert neben der ersten Drehmomentstütze und der zweiten Drehmomentstütze keine weitere Drehmomentstütze.

Erfindungsgemäß sind die erste Drehmomentstütze und die zweite Drehmomentstütze asymmetrisch. Dies bedeutet, dass zwischen der ersten Drehmomentstütze und der zweiten Drehmomentstütze keinerlei Symmetriebeziehung besteht. Die erste Drehmomentstütze und die zweite Drehmomentstütze sind weder punktsymmetrisch, achsensymmetrisch noch spiegelsymmetrisch. Insbesondere sind die erste Drehmomentstütze und die zweite Drehmomentstütze zu keiner Längsschnittebene, d.h. einer Ebene, welche die Drehachse einer Eingangswelle des Getriebes vollständig beinhaltet, spiegelsymmetrisch.

Die erfindungsgemäße Asymmetrie bezieht sich auf die Form der ersten Drehmomentstütze und der zweiten Drehmomentstütze. Die asymmetrische Form bedingt eine asymmetrische Verteilung der Steifigkeit und der Massen der ersten Drehmomentstütze und der zweiten Drehmomentstütze. Dadurch ergeben sich unterschiedliche Resonanzfrequenzen. Dies sorgt für eine Änderung des Resonanzverhaltens mit einem breiteren, dafür aber kleineren Peak im Frequenzspektrum. Das eingangs erwähnte Phänomen des Torque Arm Flapping lässt sich somit entschärfen.

In einer nicht beanspruchten Weiterbildung sind die erste Drehmomentstütze und die zweite Drehmomentstütze jeweils einstückig ausgeführt. Handelt es sich bei der ersten Drehmomentstütze und der zweiten Drehmomentstütze um Gussteile, sind entsprechende Gussformen zueinander asymmetrisch.

Die erste Drehmomentstütze weist ein Gewicht auf, das an der ersten Drehmomentstütze fixiert ist. Dies impliziert, dass das Gewicht und die übrige erste Drehmomentstütze zweistückig, d.h. als separate, nicht einstückig miteinander verbundene Teile ausgeführt sind. Erfindungsgemäß ist das Gewicht an dem Stützarm oder dem Befestigungselement der ersten Drehmomentstütze fixiert.

Von Vorteil ist es, wenn das Gewicht radial möglichst weit außerhalb angebracht ist.

Die Bezeichnung Gewicht wird hier für ein beliebiges Bauteil verwendet, dessen Masse genutzt wird, um den erfindungsgemäßen Effekt zu erreichen.

Die zweite Drehmomentstütze besteht bevorzugt aus einem Stützarm und einem Befestigungselement. Dies bedeutet erfindungsgemäß, dass die zweite Drehmomentstütze kein Gewicht aufweist. Vorzugsweise sind der Stützarm und das Befestigungselement der zweiten Drehmomentstütze einstückig miteinander verbunden.

In einer bevorzugten Weiterbildung ist die zweite Drehmomentstütze zu einer Anordnung symmetrisch, die aus dem Stützarm und dem Befestigungselement der ersten Drehmomentstütze besteht. Diese Anordnung ist bevorzugt einstückig ausgeführt, d.h. der Stützarm und das Befestigungselement der ersten Drehmomentstütze sind einstückig miteinander verbunden.

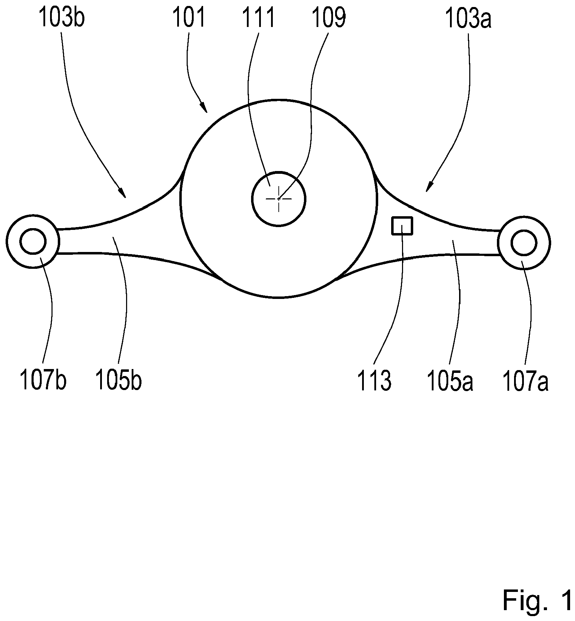

Ein bevorzugtes Ausführungsbeispiel der Erfindung ist in Figur 1 dargestellt. Im Einzelnen zeigt:
Figur 1 eine Frontansicht eines Windkraftgetriebes.

Das in Figur 1 dargestellte Getriebe 101 weist ein Getriebegehäuse auf, das eine erste Drehmomentstütze 103a und eine zweite Drehmomentstütze 103b ausbildet. Die beiden Drehmomentstützen 103a, 103b weisen jeweils einen Stützarm 105a, 105b und ein Befestigungsauge 107a, 107b auf. Die Stützarme 105a, 105b erstrecken sich zwischen dem Getriebegehäuse und dem jeweiligen Befestigungsauge 107a, 107b. Mit dem jeweiligen Befestigungsauge 107a, 107b sind die Stützarme 105a, 105b einstückig verbunden. Ebenso sind die Stützarme 105a, 105b einstückig mit dem Getriebegehäuse verbunden.

Eine Anordnung bestehend aus dem ersten Befestigungsauge 107a und dem Stützarm 105a der ersten Drehmomentstütze 103 ist zu einer Anordnung bestehend aus dem Befestigungsauge 107b und dem Stützarm 105b der zweiten Drehmomentstütze 103b bezüglich einer senkrecht durch eine Drehachse 109 einer Eingangswelle 111 des Getriebes 101 verlaufenden Längsschnittebene spiegelsymmetrisch. Allerdings ist die erste Drehmomentstütze 103a mit einem Gewicht 113 versehen. Daher sind die erste Drehmomentstütze 103a und zweiten Drehmomentstütze 103b asymmetrisch, da. Das Gewicht 113 dient der Entschärfung des Schwingungsverhaltens der beiden Drehmomentstützen 103a, 103b.

### Bezuqszeichen

- 101: Getriebe
- 103a: erste Drehmomentstütze
- 103b: zweite Drehmomentstütze
- 105a: Stützarm der ersten Drehmomentstütze
- 105b: Stützarm der zweiten Drehmomentstütze
- 107a: Befestigungsauge der ersten Drehmomentstütze
- 107b: Befestigungsauge der zweiten Drehmomentstütze
- 109: Drehachse
- 111: Eingangswelle
- 113: Gewicht

## Patentansprüche

1. Getriebe (101) für eine Windkraftanlage mit einer ersten Drehmomentstütze (103a) und einer zweiten Drehmomentstütze (103b); wobei
die erste Drehmomentstütze (103a) und die zweite Drehmomentstütze (103b) zueinander asymmetrisch sind; wobei
die erste Drehmomentstütze (103a) ein Gewicht (113) aufweist, das an einem Stützarm (105a) oder einem Befestigungselement (107a) der ersten Drehmomentstütze (103a) fixiert ist; **dadurch gekennzeichnet, dass**
die zweite Drehmomentstütze (103b) kein Gewicht aufweist.

2. Getriebe nach dem vorhergehenden Anspruch; **dadurch gekennzeichnet, dass** die zweite Drehmomentstütze (103b) zu einer Anordnung bestehend aus dem Stützarm (105a) und einem Befestigungselement (107a) der ersten Drehmomentstütze (103a) symmetrisch ist.

## Claims

1. Transmission (101) for a wind turbine, having a first torque support (103a) and a second torque support (103b); wherein the first torque support (103a) and the second torque support (103b) are asymmetrical in relation to one another; wherein the first torque support (103a) has a weight (113) which is fixed to a support arm (105a) or to a fastening element (107a) of the first torque support (103a); **characterized in that**
the second torque support (103b) has no weight.

2. Transmission according to the preceding claim; **characterized in that** the second torque support (103b) is symmetrical in relation to an arrangement consisting of the support arm (105a) and a fastening element (107a) of the first torque support (103a).

## Revendications

1. Engrenage (101) pour une éolienne, comprenant un premier support de couple (103a) et un deuxième support de couple (103b) ; dans lequel
le premier support de couple (103a) et le deuxième support de couple (103b) sont asymétriques l'un par rapport à l'autre ; dans lequel
le premier support de couple (103a) présente une masse (113) qui est fixée à un bras de support (105a) ou à un élément de fixation (107a) du premier support de couple (103a) ;
**caractérisé en ce que** le deuxième support de couple (103b) ne présente aucune masse.

2. Engrenage selon la revendication précédente, **caractérisé en ce que** le deuxième support de couple (103b) est symétrique à un agencement composé du bras de support (105a) et d'un élément de fixation (107a) du premier support de couple (103a).
